# EUROPÄISCHE PATENTSCHRIFT

(11) **EP 4 164 086 B1**
(45) Veröffentlichungstag und Bekanntmachung des Hinweises auf die Patenterteilung: **10.06.2026**
(21) Anmeldenummer: 22200697.5
(22) Anmeldetag: 11.10.2022
(51) Int. Cl.: H02J 7/50, H02J 7/60, H02J 7/00, B25F 5/00

(54) **ELEKTRISCHER BETRIEB VON EINANDER ZUGEORDNETEN ELEKTROGERÄTEN**
ELECTRICAL OPERATION OF ELECTRICAL DEVICES ASSOCIATED WITH EACH OTHER
FONCTIONNEMENT ÉLECTRIQUE D'APPAREILS ÉLECTRIQUES ASSOCIÉS

(30) Priorität: 11.10.2021 DE 102021126284
(43) Veröffentlichungstag der Anmeldung: 12.04.2023
(73) Patentinhaber: Einhell Germany AG, 94405 Landau / Isar (DE)
(72) Erfinder: Thannhuber, Markus, 94405 Landau/Isar (DE)
(74) Vertreter: Hofstetter, Schurack & Partner

(56) Entgegenhaltungen:
- EP-A1- 3 687 024
- US-A1- 2019 067 756
- US-A1- 2020 019 134

## Beschreibung

Die vorliegende Erfindung betrifft ein Verfahren zum gekoppelten Betrieb eines ersten Elektrogeräts, das mittels eines ersten Akkupacks betreibbar ist, und eines zweiten Elektrogeräts, das mittels eines zweiten Akkupacks betreibbar ist. Die Erfindung betrifft ferner ein Kommunikationssystem zum gekoppelten Betrieb solcher Elektrogeräte.

Beim Betrieb zweier Elektrogeräte, beispielsweise von Elektrowerkzeugen, Gartengeräten, Zubehör und so weiter, kann es unter Umständen wünschenswert sein, dass, wenn eines der Elektrogeräte aktiviert wird, auch das andere Elektrogerät aktiviert wird oder dergleichen. Wird beispielsweise ein Elektrowerkzeug aktiviert, so kann es wünschenswert sein, dass eine entsprechende Absauganlage oder Lampe ebenfalls aktiviert wird. Eine Vielzahl weiterer Anwendungssituationen ist entsprechend denkbar.

Elektrogeräte, die drahtlos miteinander kommunizieren und Informationen austauschen können, sind an sich bekannt. In der beschriebenen Situation ist es jedoch nicht immer wünschenswert, dass bei der Aktivierung eines Elektrogeräts das andere Elektrogerät in jedem Fall aktiviert wird.

Dokument EP 3 687 024 A1 beschreibt ein System, das eine Kettensäge mit einem Akkupack und einem Gebläse umfasst, wobei das Akkupack eine Kommunikationsschnittstelle umfasst, die mit einer Kommunikationsschnittstelle des Gebläses direkt oder über einen Cloud-Dienst kommunizieren kann. Bei Betrieb eines ersten Elektrowerkzeugs kann auch der Betrieb eines zweiten Elektrowerkzeugs ausgelöst werden. Eine Konfigurationsschnittstelle für ein Werkzeug-zu-Werkzeug-Automatisierungssystem wird beschrieben, mit der die Konfiguration der Elektrowerkzeuge hinsichtlich der Verbindungen und der Kommunikation der Elektrowerkzeuge innerhalb eines lokalen Mesh-Netzwerks gesteuert werden kann.

Es ist eine Aufgabe der vorliegenden Erfindung, einen selektiveren gekoppelten Betrieb zweier Elektrogeräte anzugeben.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, nach einer Aktivierung eines ersten Elektrogeräts eine Zuordnung des ersten Elektrogeräts oder des entsprechenden ersten Akkupacks zu einem zweiten Elektrogerät oder einem entsprechenden zweiten Akkupack zu überprüfen und abhängig von einem Ergebnis der Überprüfung das zweite Elektrogerät zu aktivieren oder einen aktiven Betriebsmodus zu verändern.

Gemäß einem Aspekt der Erfindung wird ein Verfahren zum gekoppelten Betrieb eines ersten Elektrogeräts, das mittels eines ersten Akkupacks betreibbar ist, und eines zweiten Elektrogeräts, das mittels eines zweiten Akkupacks betreibbar ist, angegeben. Eine Aktivierung des ersten Elektrogeräts wird, insbesondere mittels des ersten Akkupacks und/oder mittels des ersten Elektrogeräts, automatisch detektiert. Abhängig von der Detektion der Aktivierung, insbesondere wenn die Aktivierung detektiert wurde, wird eine Aktivierungsinformation von dem ersten Akkupack oder dem ersten Elektrogerät an eine externe Steuereinheit, insbesondere an eine zu dem ersten Akkupack und dem ersten Elektrogerät externe Steuereinheit, übermittelt. Wenn die Aktivierungsinformation übermittelt wurde und insbesondere nachdem die Aktivierungsinformation übermittelt wurde, wird mittels der Steuereinheit überprüft, ob das erste Akkupack und/oder das erste Elektrogerät dem zweiten Akkupack und/oder dem zweiten Elektrogerät gemäß einer vorgegebenen Zuordnungsvorschrift zugeordnet ist, wobei eine gültige Zuordnung nur gegeben ist, wenn sich das erste Elektrogerät und das weite Elektrogerät innerhalb einer Maximaldistanz voneinander befinden oder wenn sich das erste Akkupack und das zweite Akkupack innerhalb einer Maximaldistanz voneinander befinden. Abhängig von einem Ergebnis der Überprüfung wird ein aktiver Betriebsmodus des zweiten Elektrogeräts automatisch aktiviert oder verändert.

Dass die Elektrogeräte mittels der Akkupacks betreibbar sind kann derart verstanden werden, dass das jeweilige Elektrogerät mit dem jeweiligen Akkupack verbindbar ist und durch das entsprechende Akkupack mit elektrischer Energie versorgt werden kann. Bei der Durchführung des erfindungsgemäßen Verfahrens sind die Elektrogeräte insbesondere mit den Akkupacks verbunden.

Das erste und das zweite Akkupack weisen hierzu jeweils wenigstens eine Akkumulatorzelle auf, beispielsweise wenigstens eine Li-Ionen-Akkumulatorzelle.

Wird der aktive Betriebsmodus des zweiten Elektrogeräts aktiviert, so kann dies derart verstanden werden, dass das zweite Elektrogerät sich zunächst nicht in dem aktiven Betriebsmodus befindet und dann entsprechend in den aktiven Betriebsmodus gebracht wird. Wird der aktive Betriebsmodus des zweiten Elektrogeräts verändert, so kann dies beispielsweise einer Veränderung eines oder mehrerer Betriebsparameter des zweiten Elektrogeräts entsprechen.

Die Aktivierung des ersten Elektrogeräts kann im Allgemeinen manuell erfolgen oder automatisch, beispielsweise aufgrund einer entsprechenden Programmierung des ersten Elektrogeräts. Die Aktivierung des ersten Elektrogeräts kann beispielsweise detektiert werden, indem eine Betätigung eines Bedienelements, beispielsweise zur manuellen Bedienung, insbesondere eines Hebels, Schalters oder dergleichen, detektiert wird. Alternativ oder zusätzlich kann die Aktivierung des ersten Elektrogeräts auch dadurch detektiert werden, dass eine Abgabe elektrischer Energie von dem ersten Akkupack an das erste Elektrogerät detektiert wird. Die Detektion kann dabei also durch das erste Akkupack allein erfolgen oder durch die Erfassung entsprechender Sensorsignale mittels des ersten Akkupacks, wobei ein Sensor, der das Sensorsignal abhängig von der Aktivierung erzeugt innerhalb des ersten Akkupacks angeordnet sein kann, sich jedoch auch außerhalb des ersten Akkupacks, insbesondere in dem ersten Elektrogerät, befinden kann. Das Sensorsignal kann dann beispielsweise über die elektrische Verbindung des ersten Akkupacks mit dem ersten Elektrogerät übermittelt werden.

Die Aktivierung oder Veränderung des aktiven Betriebsmodus des zweiten Elektrogeräts erfolgt dagegen automatisch, also ohne dass hierzu ein Tätigwerden eines Benutzers erforderlich ist.

Im Betrieb eines der Elektrogeräte ist ein Akkugehäuse des entsprechenden Akkupacks insbesondere mit dem Gehäuse des Elektrogeräts gekoppelt beziehungsweise an diesem befestigt. Das Akkupack ist dabei lösbar, insbesondere zerstörungsfrei lösbar, mit dem Gehäuse des Elektrogeräts verbunden, beispielsweise über eine Rastverbindung, eine Steckverbindung und/oder eine Klemmverbindung. Insbesondere kann die mechanische Verbindung des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrogeräts jeweilige Schnittstellen aufweisen.

Die elektrische Verbindung kann beispielsweise über einen oder mehrere Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Der aktive Betriebsmodus des zweiten Elektrogeräts kann als Betriebsmodus verstanden werden, in dem das zweite Elektrogerät eine bestimmungsgemäße Funktion durchführt. Dabei wird das zweite Elektrogerät insbesondere durch das zweite Akkupack mit elektrischer Energie versorgt.

Die vorgegebene Zuordnungsvorschrift ist auf einer Speichereinheit gespeichert, wobei die Steuereinheit beispielsweise die Speichereinheit beinhalten kann oder drahtgebunden oder drahtlos auf diese zugreifen kann. Die Steuereinheit kann als extern zu dem ersten Akkupack und dem ersten Elektrogerät verstanden werden, kann also beispielsweise Teil des zweiten Akkupacks, des zweiten Elektrogeräts oder einer Cloud-Recheneinheit, die auch als externe Servercomputereinheit bezeichnet werden kann, sein.

Enthält das zweite Akkupack oder das zweite Elektrogerät die Steuereinheit, so kann die Aktivierungsinformation beispielsweise direkt von dem ersten Akkupack oder dem ersten Elektrogerät an die Steuereinheit übermittelt werden oder indirekt über eine externe Servercomputereinheit.

Ist die Steuereinheit Teil des zweiten Akkupacks oder des zweiten Elektrogeräts, so kann die Steuereinheit selbst beispielsweise den aktiven Betriebsmodus des zweiten Elektrogeräts abhängig von dem Ergebnis der Überprüfung aktivieren oder verändern. Beinhaltet die Servercomputereinheit die Steuereinheit, so kann die Steuereinheit eine weitere Steuereinheit des zweiten Akkupacks oder zweiten Elektrogeräts drahtlos über das Ergebnis der Überprüfung informieren oder dieser die Zuordnungsvorschrift oder einen Teil der Zuordnungsvorschrift drahtlos übermitteln und die weitere Zuordnungsvorschrift kann dann abhängig von dem Ergebnis der Überprüfung den aktiven Betriebsmodus automatisch aktivieren oder verändern.

Insbesondere wird der aktive Betriebsmodus des zweiten Elektrogeräts nur dann aktiviert oder verändert, wenn gemäß dem Ergebnis der Überprüfung das erste Akkupack und/oder das erste Elektrogerät dem zweiten Akkupack und/oder dem zweiten Elektrogerät zugeordnet ist.

Die Zuordnung kann dabei statisch sein. Die Zuordnung kann in verschiedenen Ausführungsformen aber auch dynamisch sein, sich also zeitabhängig verändern. Die Zuordnung kann von verschiedenen Bedingungen abhängen, die beispielsweise auch die räumliche Position des ersten Elektrogeräts bezüglich des zweiten Elektrogeräts und so weiter beinhalten kann.

Die Zuordnung kann insbesondere derart verstanden werden, dass das individuelle erste Akkupack und/oder das individuelle erste Elektrogerät dem individuellen zweiten Akkupack und/oder dem individuellen zweiten Elektrogerät zugeordnet ist. **In** anderen Ausführungsformen kann die Zuordnung auf einer allgemeineren oder funktionalen Ebene erfolgen. Beispielsweise kann ein Gerätetyp des ersten Elektrogeräts einem Gerätetyp des zweiten Elektrogeräts zugeordnet sein und so weiter. Es sind auch entsprechende Mischformen denkbar. Durch die Zuordnung lassen sich auch Besitzverhältnisse oder Eigentumsverhältnisse der Akkupacks beziehungsweise der Elektrogeräte abbilden.

Durch das erfindungsgemäße Verfahren wird also erreicht, dass die Aktivierung oder Veränderung des aktiven Betriebsmodus des zweiten Elektrogeräts bei der Aktivierung des ersten Elektrogeräts nur unter bestimmten, durch die Zuordnung spezifizierten, Bedingungen erfolgt, sodass ein selektiverer gekoppelter Betrieb des ersten und des zweiten Elektrogeräts möglich wird.

Hinsichtlich der Ausgestaltungsform der Elektrogeräte sind verschiedene Möglichkeiten denkbar, in denen die Erfindung besonders vorteilhaft ist. Beispielsweise könnte das erste Elektrogerät als Elektrowerkzeug, beispielsweise als Säge, Bohrmaschine oder sonstiges Elektrowerkzeug, ausgestaltet sein, während das zweite Elektrogerät als Absaugvorrichtung, Staubsauger, Lampe oder sonstige Beleuchtungsvorrichtung ausgestaltet sein kann. Diese besonders vorteilhaften Anwendungsbeispiele sind jedoch nicht grundsätzlich beschränkend aufzufassen, sondern die Erfindung kann auch in anderen Konstellationen vorteilhaft eingesetzt werden, in denen der aktive Betriebsmodus des zweiten Elektrogeräts die Verwendung des ersten Elektrogeräts positiv beeinflussen oder unterstützen kann.

Gemäß zumindest einer Ausführungsform des Verfahrens wird der aktive Betriebsmodus nur dann verändert oder aktiviert, wenn als Ergebnis der Überprüfung festgestellt wird, dass das erste Akkupack dem zweiten Akkupack und/oder dem zweiten Elektrogerät zugeordnet ist.

Gemäß zumindest einer Ausführungsform wird der aktive Betriebsmodus nur dann verändert oder aktiviert, wenn als Ergebnis der Überprüfung festgestellt wird, dass das erste Elektrogerät dem zweiten Akkupack und/oder dem zweiten Elektrogerät zugeordnet ist.

Gemäß zumindest einer Ausführungsform wird als Ergebnis der Überprüfung festgestellt, dass das erste Elektrogerät dem zweiten Elektrogerät zugeordnet ist, wenn, beispielsweise genau dann, wenn, gemäß der Zuordnung ein erster Gerätetyp des ersten Elektrogeräts einem zweiten Gerätetyp des zweiten Elektrogeräts zugeordnet ist.

Beispielsweise können die Elektrogeräte entsprechend ihrer Funktion und ihres Einsatzzweckes einem von zwei oder mehr vordefinierten Gerätetypen entsprechen.

Der Gerätetyp kann dabei der konkreten Funktion des Elektrogeräts entsprechen, beispielsweise können Sauger, Beleuchtungsvorrichtungen, Gebläse, Bohrmaschinen, Tischkreissägen, Kappsägen, Bohrhammer und so weiter jeweils eigene Gerätetypen darstellen. Geräte mit verschiedenen Funktionen können jedoch auch gruppiert werden. So können beispielsweise Elektrogeräte mit abhängigem Gerätetyp und Elektrogeräte mit auslösendem Gerätetyp identifiziert werden. Elektrogeräte mit abhängigem Gerätetyp könnten dann beispielsweise Sauger, Beleuchtungsvorrichtungen oder Gebläse und so weiter sein. Elektrogeräte mit auslösendem Gerätetyp könnten solche sein, die eines oder mehrere Elektrogeräte mit abhängigem Gerätetyp durch ihre Aktivierung triggern, wie beispielsweise Bohrmaschinen, Tischkreissägen, Kappsägen, Bohrhämmer und so weiter.

Bei solchen Ausführungsformen erfolgt also insbesondere keine individuelle Zuordnung der konkreten Akkupacks oder der konkreten Elektrogeräte zueinander, sondern eine funktionale Zuordnung der Geräte entsprechend ihrer Einsatzgebiete. Dadurch lässt sich der gekoppelte Betrieb universell für verschiedenste Kombinationen von Gerätetypen und gegebenenfalls auch bei unterschiedlichen Herstellern einsetzen.

In anderen Ausführungsformen wird als Ergebnis der Überprüfung festgestellt, dass das erste Elektrogerät dem zweiten Elektrogerät zugeordnet ist, wenn beispielsweise genau dann, gemäß der Zuordnung ein erster individueller Geräteidentifikator des ersten Elektrogeräts einem zweiten individuellen Geräteidentifikator des zweiten Elektrogeräts zugeordnet ist.

Ein individueller Geräteidentifikator kann dabei als Kennung oder Code oder dergleichen verstanden werden, die oder der genau ein Elektrogerät kennzeichnet. Auf diese Weise können also ganz bestimmte Elektrogeräte einander zugeordnet werden und nur dementsprechend die Aktivierung des zweiten Elektrogeräts vorgenommen oder beeinflusst werden. Beispielsweise kann auf diese Weise implementiert werden, dass der aktive Betriebszustand des zweiten Elektrogeräts nur dann aktiviert oder verändert wird, wenn es sich bei dem ersten Elektrogerät und dem zweiten Elektrogerät um Elektrogeräte desselben Eigentümers oder entsprechend verknüpfter Eigentümer handelt oder dergleichen. Allgemeiner ausgedrückt kann ein konkreter Elektrogerätepool definiert werden, der wie beschrieben gekoppelt betrieben werden kann.

Die individuelle Zuordnung des ersten und des zweiten Elektrogeräts zueinander schließt dabei wohlgemerkt aber nicht aus, dass das erste Elektrogerät auch weiteren Elektrogeräten außer dem zweiten Elektrogerät zugeordnet sein kann oder umgekehrt.

An die Stelle der Zuordnung der Elektrogeräte zueinander kann auch eine Zuordnung der Akkupacks zueinander beziehungsweise eines Akkupacks zu einem Elektrogerät treten.

Dementsprechend wird gemäß zumindest einer Ausführungsform als Ergebnis der Überprüfung festgestellt, dass das erste Akkupack mit dem zweiten Akkupack zugeordnet ist, wenn, beispielsweise genau dann, wenn gemäß der Zuordnung ein erster individueller Akkuidentifikator des ersten Akkupacks einem zweiten individuellen Akkuidentifikator des zweiten Akkupacks zugeordnet ist.

In anderen Ausführungsformen wird als Ergebnis der Überprüfung festgestellt, dass das erste Akkupack dem zweiten Elektrogerät zugeordnet ist, wenn, insbesondere genau dann, wenn gemäß der Zuordnung der erste individuelle Akkuidentifikator des ersten Akkupacks dem zweiten individuellen Geräteidentifikator des zweiten Elektrogeräts zugeordnet ist.

Umgekehrt wird in zumindest einer Ausführungsform als Ergebnis der Überprüfung festgestellt, dass das erste Elektrogerät dem zweiten Akkupack zugeordnet ist, wenn, beispielsweise genau dann, wenn gemäß der Zuordnung der erste individuelle Geräteidentifikator des ersten Elektrogeräts dem zweiten individuellen Akkuidentifikator des zweiten Akkupacks zugeordnet ist.

Ebenso ist es möglich, dass Akkupacks bestimmten Gerätetypen zugeordnet sind oder umgekehrt.

Dementsprechend wird in verschiedenen Ausführungsformen als Ergebnis der Überprüfung festgestellt, dass das erste Akkupack dem zweiten Elektrogerät zugeordnet ist, wenn, insbesondere genau dann, wenn gemäß der Zuordnung der erste individuelle Akkuidentifikator des ersten Akkupacks dem zweiten Gerätetyp des zweiten Elektrogeräts zugeordnet ist.

Gemäß zumindest einer Ausführungsform wird als Ergebnis der Überprüfung festgestellt, dass das erste Elektrogerät dem zweiten Akkupack zugeordnet ist, wenn, beispielsweise genau dann, wenn gemäß der Zuordnung der erste Gerätetyp des ersten Elektrogeräts dem zweiten individuellen Akkuidentifikator des zweiten Akkupacks zugeordnet ist.

**In** verschiedenen Ausführungsformen kann neben dem aktiven Betriebsmodus des zweiten Elektrogeräts auch ein aktiver Betriebsmodus eines oder mehrerer weiterer Elektrogeräte abhängig von dem Ergebnis der Überprüfung automatisch aktiviert werden.

Dazu kann die Steuereinheit beispielsweise abhängig von dem Ergebnis der Überprüfung mit entsprechenden weiteren Steuereinheiten des einen oder der mehreren weiteren Elektrogeräte kommunizieren, um deren aktiven Betriebsmodus zu aktivieren oder zu verändern.

In einem Anwendungsbeispiel können das zweite und die weiteren Elektrogeräte demselben Gerätetyp entsprechen, beispielsweise einem Sauger. Eine erfolgreiche Überprüfung der Zuordnung des ersten Akkupacks und/oder des ersten Elektrogeräts zu dem zweiten Akkupack und/oder dem zweiten Elektrogerät kann daher, gewissermaßen stellvertretend, hinsichtlich der weiteren Elektrogeräte genutzt werden, ohne dass explizit weitere Zuordnungen geprüft werden müssten.

Gemäß zumindest einer Ausführungsform beinhaltet das zweite Akkupack oder das zweite Elektrogerät die Steuereinheit.

In verschiedenen solcher Ausführungsformen wird die Aktivierungsinformation über eine direkte drahtlose Kommunikationsverbindung zwischen einer ersten Kommunikationsschnittstelle des ersten Akkupacks oder des ersten Elektrogeräts und einer zweiten Kommunikationsschnittstelle der Steuereinheit übermittelt. Alternativ kann die Aktivierungsinformation über eine indirekte Kommunikationsverbindung zwischen der ersten Kommunikationsschnittstelle und der zweiten Kommunikationsschnittstelle übermittelt werden, wobei die indirekte Kommunikationsverbindung über die externe Servercomputereinheit hergestellt wird.

Die externe Servercomputereinheit ist dabei insbesondere extern zu den beiden Akkupacks und extern zu den beiden Elektrogeräten angeordnet.

Die Zuordnung kann beispielsweise auf einer Speichereinheit des zweiten Akkupacks oder des zweiten Elektrogeräts, insbesondere der Steuereinheit, gespeichert sein oder auf einer Speichereinheit der Servercomputereinheit. In letzterem Falle kann die Steuereinheit die Vorschrift von der Servercomputereinheit erhalten und die Überprüfung dann entsprechend durchführen.

Insbesondere kann die Servercomputereinheit diese Zuordnungsvorschrift speichern und die Zuordnungsvorschrift kann von der Servercomputereinheit an das zweite Akkupack oder das zweite Elektrogerät übermittelt werden, wenn und insbesondere nachdem die Aktivierungsinformation übermittelt wurde.

Alternativ kann das erste Akkupack oder das erste Elektrogerät die Zuordnungsvorschrift speichern und die Zuordnungsvorschrift von dem ersten Akkupack oder dem ersten Elektrogerät zusammen mit der Aktivierungsinformation oder nachdem die Aktivierungsinformation übermittelt wurde, an das zweite Akkupack oder das zweite Elektrogerät übermitteln.

In anderen Ausführungsformen kann die Servercomputereinheit die Steuereinheit beinhalten und dementsprechend die Überprüfung vornehmen.

In manchen Ausführungsformen kann dabei die Servercomputereinheit die Zuordnungsvorschrift speichern.

In anderen Ausführungsformen speichert das erste Akkupack oder das erste Elektrogerät oder zweite Akkupack oder das zweite Elektrogerät die Zuordnungsvorschrift und die Zuordnungsvorschrift wird von dem ersten oder zweiten Akkupack beziehungsweise von dem ersten oder zweiten Elektrogerät an die Servercomputereinheit übermittelt, wenn und insbesondere nachdem die Aktivierungsinformation übermittelt wurde.

Gemäß zumindest einer Ausführungsform wird mittels des ersten Akkupacks oder des ersten Elektrogeräts oder des zweiten Akkupacks oder des zweiten Elektrogeräts eine Benutzereingabe erfasst. Die Aktivierungsinformation wird in Reaktion auf die erfasste Benutzereingabe übermittelt, also insbesondere nur wenn die Benutzereingabe erfolgt und erfasst wurde, oder der aktive Betriebsmodus wird nur dann aktiviert oder verändert, wenn die Benutzereingabe erfasst wurde.

Beispielsweise kann im letzteren Fall die Information, dass die Benutzereingabe erfasst wurde, als Teil der Aktivierungsinformation übermittelt werden.

Erfasst das zweite Akkupack oder das zweite Elektrogerät die Benutzereingabe, so kann das zweite Akkupack oder das zweite Elektrogerät eine entsprechende Information an das erste Akkupack oder das erste Elektrogerät übermitteln, welches dann entsprechend nach der Aktivierung des ersten Elektrogeräts die Aktivierungsinformation wie beschrieben übermitteln kann.

Die Benutzereingabe kann beispielsweise durch die Betätigung entsprechender Knöpfe, Tasten, berührungsempfindlicher Displays oder auch über eine Spracheingabe erfasst werden.

Gemäß zumindest einer Ausführungsform wird mittels des ersten Akkupacks oder des ersten Elektrogeräts wenigstens ein Maschinen- oder Betriebsparameter des ersten Akkupacks oder des ersten Elektrogeräts erfasst. Die Aktivierungsinformation wird in Reaktion auf den erfassten wenigstens einen Maschinen- oder Betriebsparameter übermittelt, also insbesondere nur wenn der wenigstens eine Maschinen- oder Betriebsparameter eine oder mehrere vorgegebene Bedingungen erfüllt, oder der aktive Betriebsmodus wird nur dann aktiviert oder verändert, wenn der wenigstens eine Maschinen- oder Betriebsparameter die eine oder mehreren Bedingungen erfüllt.

Die Bedingungen können beispielsweise eine Veränderung des wenigstens einen Maschinen- oder Betriebsparameters in einer bestimmten Weise erfordern. Beispielsweise können die Bedingungen erfüllt sein, wenn eine Stromabgabe von dem ersten Akkupack an das erste Elektrogerät über einen vorgegebenen Stromschwellwert ansteigt und/oder wenn eine Temperatur des ersten Akkupacks oder des ersten Elektrogeräts über einen vorgegebenen Temperaturschwellwert ansteigt und so weiter. Statt des Anstiegs des Stroms oder der Temperatur über den entsprechenden Schwellwert kann auch eine Überschreitung entsprechender Schwellwerte durch die jeweilige Anstiegsrate oder Anstiegsgeschwindigkeit, also insbesondere die erste zeitlichen Ableitung, des Stroms oder der Temperatur als Bedingung vorgesehen sein.

Weitere Bedingung dafür, dass die Aktivierungsinformation übermittelt wird oder der aktive Betriebsmodus aktiviert beziehungsweise verändert wird, kann eine bisherige Anzahl von Übertragungen einer Aktivierungsinformation und so weiter.

Je nach Ausgestaltungsform des ersten und/oder zweiten Elektrogeräts können auch funktionsbezogene Bedingungen festgelegt werden. Beispielsweise kann eine Beleuchtungsvorrichtung als zweites Elektrogerät nur dann aktiviert werden, wenn neben den sonstigen beschriebenen Bedingungen eine Umgebungshelligkeit, gemessen beispielsweise durch einen entsprechenden Sensor des zweiten Elektrogeräts oder des zweiten Akkupacks, unterschritten wird.

Gemäß einem weiteren Aspekt der Erfindung wird auch ein Kommunikationssystem zum gekoppelten Betrieb eines ersten Elektrogeräts, das mittels eines ersten Akkupacks betreibbar ist, und eines zweiten Akkupacks, das mittels eines zweiten Akkupacks betreibbar ist, angegeben. Das Kommunikationssystem weist einen Sensorschaltkreis, insbesondere für das erste Akkupack und/oder das erste Elektrogerät, auf, der dazu eingerichtet ist, eine Aktivierung des ersten Elektrogeräts automatisch zu detektieren, sowie eine erste Kommunikationsschnittstelle für das erste Akkupack oder das erste Elektrogerät, das mit dem Sensorschaltkreis gekoppelt ist und dazu eingerichtet ist, abhängig von der Detektion der Aktivierung eine Aktivierungsinformation zu senden. Das Kommunikationssystem weist eine externe Steuereinheit mit einer zweiten Kommunikationsschnittstelle auf, die dazu eingerichtet ist, die Aktivierungsinformation zu erhalten, wobei die Steuereinheit dazu eingerichtet ist, wenn die Aktivierungsinformation erhalten wurde, zu überprüfen, ob das erste Akkupack und/oder das erste Elektrogerät dem zweiten Akkupack und/oder dem zweiten Elektrogerät gemäß einer vorgegebenen Zuordnungsvorschrift zugeordnet ist, wobei eine gültige Zuordnung nur gegeben ist, wenn sich das erste Elektrogerät und das weite Elektrogerät innerhalb einer Maximaldistanz voneinander befinden oder wenn sich das erste Akkupack und das zweite Akkupack innerhalb einer Maximaldistanz voneinander befinden. Das Kommunikationssystem weist einen Steuerschaltkreis für das zweite Akkupack oder das zweite Elektrogerät auf, der dazu eingerichtet ist, abhängig von einem Ergebnis der Überprüfung automatisch einen aktiven Betriebsmodus des zweiten Elektrogeräts zu aktivieren oder zu verändern.

Weitere Ausführungsformen des erfindungsgemäßen Kommunikationssystems folgen direkt aus den verschiedenen Ausgestaltungsformen des erfindungsgemäßen Verfahrens und umgekehrt. Insbesondere kann ein Kommunikationssystem gemäß der Erfindung zur Ausführung eines erfindungsgemäßen Verfahrens eingerichtet sein oder ein solches Verfahren ausführen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es sind insbesondere auch Ausführungen und Merkmalskombinationen von der Erfindung umfasst, die nicht alle Merkmale eines ursprünglich formulierten Anspruchs aufweisen. Es sind darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert.

Dabei zeigt Fig. eine schematische Darstellung einer beispielhaften Ausführungsform eines erfindungsgemäßen Kommunikationssystems.

In der Fig. sind ein erstes Elektrogerät 2, das exemplarisch und ohne Beschränkung der Allgemeinheit als Handkreissäge dargestellt ist, und ein zweites Elektrogerät 4, das exemplarisch und ohne Beschränkung der Allgemeinheit als Sauger dargestellt ist, dargestellt. Das erste Elektrogerät 2 ist mittels eines ersten Akkupacks 3, das wenigstens eine Akkumulatorzelle 9 enthält, betreibbar, und das zweite Elektrogerät 4 ist mittels eines zweiten Akkupacks 5, das wenigstens eine Akkumulatorzelle 12 enthält, betreibbar.

Ein Kommunikationssystem 1 beinhaltet beispielsweise das erste Akkupack 3 und das zweite Akkupack 5. In manchen Ausführungsformen kann das Kommunikationssystem 1 zudem eine externe Servercomputereinheit 6, auch als Cloud oder Internet-of-Things-Cloud beziehungsweise IoT-Cloud bezeichnet, enthalten.

Unter Umständen kann es wünschenswert sein, dass bei einer Aktivierung des ersten Elektrogeräts 2, beispielsweise der Handkreissäge, auch das zweite Elektrogerät 4, beispielsweise der Sauger, automatisch aktiviert wird, insbesondere um beim Betrieb der Handkreissäge anfallende Späne oder dergleichen abzusaugen, ohne dass ein Benutzer den Sauger dazu manuell aktivieren müsste. Es ist jedoch mitunter nicht wünschenswert, dass alle Elektrogeräte in der Umgebung des ersten Elektrogeräts 2 bei dessen Aktivierung ebenfalls automatisch aktiviert werden. Gemäß dem Kommunikationssystem 1 kann daher eine selektive Aktivierung umgesetzt werden.

Das erste Akkupack 3 oder das erste Elektrogerät 2 weist daher einen Sensorschaltkreis (nicht gezeigt) auf, der eine Aktivierung des ersten Elektrogeräts 2, beispielsweise durch den Benutzer, detektieren kann. Dazu kann der Sensor beispielsweise eine Betätigung eines Bedienelements des ersten Elektrogeräts 2 detektieren oder einen elektrischen Strom, den das erste Akkupack 3 an einem Motor des ersten Elektrogeräts 2 abgibt.

Eine erste Kommunikationsschnittstelle 8 des ersten Akkupacks 3, das mit dem Sensorschaltkreis gekoppelt ist, kann, wenn die Aktivierung des ersten Elektrogeräts 2 detektiert wurde, eine Aktivierungsinformation beispielsweise an eine zweite Kommunikationsschnittstelle 11 des zweiten Akkupacks 5 senden. Die Aktivierungsinformation kann beispielsweise durch eine erste Steuereinheit 7 des ersten Akkupacks 3 erzeugt und über die erste Kommunikationsschnittstelle 8 gesendet werden. Die zweite Kommunikationsschnittstelle 11 empfängt die Aktivierungsinformation und übermittelt diese an eine zweite Steuereinheit 10 des zweiten Akkupacks. Alternativ kann die Übermittlung der Aktivierungsinformation auch indirekt über die Servercomputereinheit 6 erfolgen, also von der ersten Kommunikationsschnittstelle 8 an die Servercomputereinheit 6 und von der Servercomputereinheit 6 an die zweite Kommunikationsschnittstelle 11.

Wenn die Aktivierungsinformation erhalten wurde, kann die zweite Steuereinheit 10 eine auf einer Speichereinheit (nicht gezeigt) des zweiten Akkupacks 5 gespeicherte Zuordnungsvorschrift überprüfen. Alternativ kann die Zuordnungsvorschrift auf einer Speichereinheit (nicht gezeigt) der Servercomputereinheit 6 gespeichert sein und die zweite Steuereinheit 10 kann diese über die zweite Kommunikationsschnittstelle 11 von der Servercomputereinheit 6 erhalten. So kann die zweite Steuereinheit 10 überprüfen, ob das erste Akkupack 3 und/oder das erste Elektrogerät 2, 4 gemäß der Zuordnungsvorschrift dem zweiten Akkupack 5 und/oder dem zweiten Elektrogerät 4 zugeordnet ist. Nur wenn dies der Fall ist, aktiviert die zweite Steuereinheit 10 dann beispielsweise das zweite Elektrogerät 2, etwa indem es den Stromfluss von der wenigstens einen Akkumulatorzelle 12 an den Motor des zweiten Elektrogeräts 4 freigibt.

In alternativen Ausführungsformen erfolgt die Überprüfung der Zuordnungsvorschrift nicht durch die zweite Steuereinheit 10, sondern durch die Servercomputereinheit 6. In diesem Fall wird die Aktivierungsinformation mittels der ersten Kommunikationsschnittstelle 8 an die Servercomputereinheit 6 übermittelt, welche die Zuordnungsvorschrift beispielsweise speichert und die Zuordnungsvorschrift entsprechend überprüft. Ist das erste Akkupack 3 und/oder das erste Elektrogerät 2, 4 gemäß der Zuordnungsvorschrift dem zweiten Akkupack 5 und/oder dem zweiten Elektrogerät 4 zugeordnet, kann die Servercomputereinheit 6 einen Aktivierungsbefehl über die zweite Kommunikationsschnittstelle 11 an die zweite Steuereinheit 10 übermitteln, welche dann, wie beschrieben, das zweite Elektrogerät 2 aktivieren kann.

Um das zweite Elektrogerät zu aktivieren oder alternativ den aktiven Betriebsmodus des zweiten Elektrogeräts 4 zu modifizieren oder anzupassen, ist das zweite Akkupack 5, insbesondere die zweite Steuereinheit 10, beispielsweise dazu in der Lage, den Hauptstrompfad zu dem zweiten Elektrogerät 4 wahlweise ein- und auszuschalten und oder den Hauptstrompfad zu spannungsbasiert oder leistungsbasiert zu steuern oder zu regeln. Das zweite Akkupack 5, insbesondere die zweite Steuereinheit 10, kann auch dazu in der Lage sein, eine Stromabnahme zu erkennen und zu messen und entsprechende Messwerte für die Steuerung oder Regelung zu verwenden.

Die Akkupacks 3, 5 können beispielsweise mit dem jeweiligen Elektrogerät 2, 4 kommunizieren, um dessen Identität zu erfahren oder auszuwerten und/oder an die Cloud weiterzuleiten. Über diese Kommunikation können die Akkupacks beispielsweise auch Betriebszustände des jeweiligen Elektrogeräts 2, 4 einstellen, beispielsweise entsprechende Drehzahlen oder Drehmomente, falls das Elektrogerät 2, 4 einen Motor aufweist, oder eine Helligkeit oder einen Dimmgrad, falls das Elektrogerät 2, 4 zur Beleuchtung dient.

Ferner können die Akkupacks 3, 5 beispielsweise mit der Cloud kommunizieren, beispielsweise um Messdaten und/oder Identifikationsdaten zu übermitteln beziehungsweise um Befehlsinformationen zu erhalten.

Hinsichtlich der Zuordnung können beispielsweise verschiedene Gerätekategorien oder Gerätetypen unterschieden werden. Beispielsweise können Elektrogeräte, die in der Regel abhängig von anderen aktiviert werden, etwa Sauger, Lampen, Gebläse, et cetera, Elektrogeräten zugeordnet werden, die typischerweise die abhängigen Geräte triggern, etwa Bohrmaschinen, Tischkreissägen, Kappsägen, Bohrhämmer, et cetera.

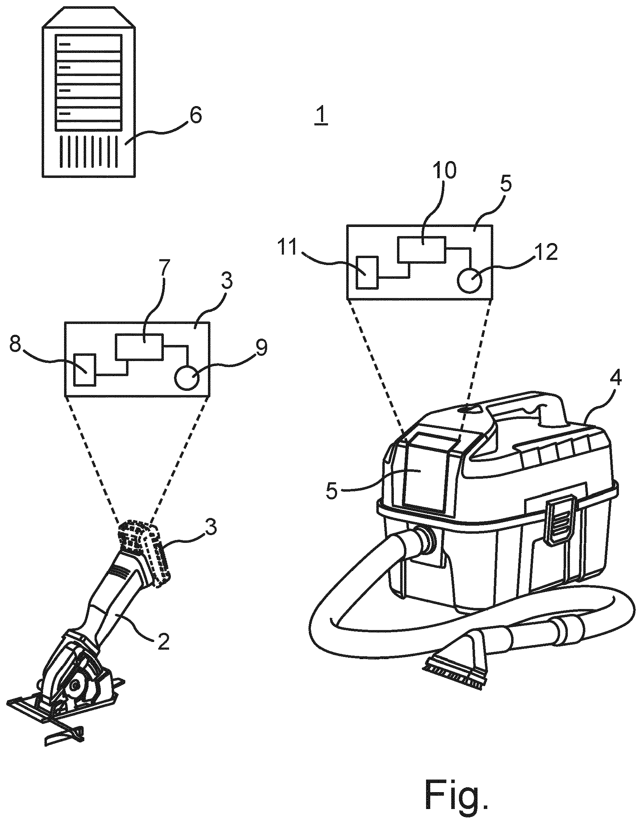

Wie insbesondere anhand der Figur beschrieben, kann durch die Erfindung ein selektiver automatischer Betrieb zweier gekoppelter Elektrogeräte realisiert werden. Die Ausführungsformen können selbstverständlich entsprechend erweitert werden, um auch mehr als zwei Elektrogeräte beziehungsweise Akkupacks abzubilden.

Die Zuordnung kann auch von den Besitz- oder Eigentumsverhältnissen der Elektrogeräte oder Akkupacks abhängen, sodass eine gültige Zuordnung nur bei demselben oder bei ganz bestimmten Besitzern beziehungsweise Eigentümern gegeben ist.

Die Kommunikation der Elektrogeräte oder Akkupacks miteinander und/oder mit der Servercomputereinheit kann beispielsweise gemäß verschiedener IoT-Technologien erfolgen, beispielsweise als Carrier-Netzwerk-basierte IoT-Kommunikation oder über Lokale Distanznetzwerke. Für die Carrier-Netzwerk-basierte IoT-Kommunikation kommen zellbasierte Ansätze, wie etwa GSM, UMTS, LTE, 5G, NB-IoT, oder nicht zellbasierte Ansätze, wie etwa LoRa, ZigBee, in Frage. Als Beispiele für lokale Distanznetzwerke seien WLAN oder Bluetooth genannt.

Die Zuordnung kann beispielsweise einer Modellierung eines Applikationsnetzwerks entsprechen. Hierfür gibt es verschiedene Möglichkeiten. Beispielsweise kann ein Pairing-Modus oder Multi-Pairing Modus realisiert werden. An einem Akkupack oder kann zum Beispiel ein abhängiges zweites Akkupack oder ein zweites auslösendes Akkupack registriert werden oder auch ein Elektrogerät einer abhängigen Gerätekategorie.

Eines oder mehrere der Elektrogeräte können auch mit jeweils mehreren Akkupacks mit Energie versorgbar sein. Es ist in diesem Fall nicht notwendig, dass mehrere Akkupacks desselben Elektrogeräts an der Kommunikation zur Zuordnung beteiligt sind.

Die Registrierung kann beispielsweise über eine Benutzerschnittstelle umgesetzt werden. Die Benutzerschnittstelle kann dabei beispielsweise Knöpfe oder Tasten, Touchscreens, Spracherkennungsschnittstellen oder Sprachwiedergabeschnittstellen und so weiter beinhalten. Ein Vorteil dabei ist, dass das Pairing etwa über WLAN oder Bluetooth einfach und kostengünstig umsetzbar ist, ohne dass zwingend eine Cloud involviert werden muss.

In komplexeren Varianten kann das Applikationsmodell in der Cloud konfiguriert werden. Hierzu kann eine Benutzerschnittstelle beispielsweise über Webformulare, Webapplikationen, mobile Applikationen oder sogenannte intelligente persönliche Assistenten implementiert werden. Zudem kann festgelegt werden welche Elektrogeräte oder Akkupacks einem bestimmten Benutzer zugeordnet sind, welche individuellen Elektrogeräte einander zugeordnet werden sind, welche Gerätetypen einander zugeordnet sind, und so weiter. Es kann somit ein Netzwerk aus miteinander kooperierenden Elektrogeräten und/oder Akkus realisiert werden.

### BEZUGSZEICHENLISTE:

- 1: Kommunikationssystem
- 2: Elektrogerät
- 3: Akkupack
- 4: Elektrogerät
- 5: Akkupack
- 6: Servercomputereinheit
- 7: Steuereinheit
- 8: Kommunikationsschnittstelle
- 9: Akkumulatorzelle
- 10: Steuereinheit
- 11: Kommunikationsschnittstelle
- 12: Akkumulatorzelle

## Patentansprüche

1. Verfahren zum gekoppelten Betrieb eines ersten Elektrogeräts (2, 4), das mittels eines ersten Akkupacks (3, 5) betreibbar ist, und eines zweiten Elektrogeräts (2, 4), das mittels eines zweiten Akkupacks (3, 5) betreibbar ist, wobei
- eine Aktivierung des ersten Elektrogeräts (2, 4) automatisch detektiert wird;
- abhängig von der Detektion der Aktivierung eine Aktivierungsinformation von dem ersten Akkupack (3, 5) oder dem ersten Elektrogerät (2, 4) an eine externe Steuereinheit (6, 7, 10) übermittelt wird;
- wenn die Aktivierungsinformation übermittelt wurde, mittels der Steuereinheit (6, 7, 10) überprüft wird, ob das erste Akkupack (3, 5) und/oder das erste Elektrogerät (2, 4) dem zweiten Akkupack (3, 5) und/oder dem zweiten Elektrogerät (2, 4) gemäß einer vorgegebenen Zuordnungsvorschrift zugeordnet ist, wobei eine gültige Zuordnung nur gegeben ist, wenn sich das erste Elektrogerät (2, 4) und das weite Elektrogerät (2, 4) innerhalb einer Maximaldistanz voneinander befinden oder wenn sich das erste Akkupack (3, 5) und das zweite Akkupack (3, 5) innerhalb einer Maximaldistanz voneinander befinden; und
- abhängig von einem Ergebnis der Überprüfung automatisch ein aktiver Betriebsmodus des zweiten Elektrogeräts (2, 4) aktiviert oder verändert wird.

2. Verfahren nach Anspruch 1, wobei der aktive Betriebsmodus nur dann aktiviert oder verändert wird, wenn als Ergebnis der Überprüfung festgestellt wird, dass
- das erste Akkupack (3, 5) dem zweiten Akkupack (3, 5) und/oder dem zweiten Elektrogerät (2, 4) zugeordnet ist; oder
- das erste Elektrogerät (2, 4) dem zweiten Akkupack (3, 5) und/oder dem zweiten Elektrogerät (2, 4) zugeordnet ist.

3. Verfahren nach einem der vorhergehenden Ansprüche, wobei als Ergebnis der Überprüfung festgestellt wird, dass das erste Elektrogerät (2, 4) dem zweiten Elektrogerät (2, 4) zugeordnet ist, wenn gemäß der Zuordnung ein erster Gerätetyp des ersten Elektrogeräts (2, 4) einem zweiten Gerätetyp des zweiten Elektrogeräts (2, 4) zugeordnet ist.

4. Verfahren nach einem der Ansprüche 1 oder 2, wobei als Ergebnis der Überprüfung festgestellt wird,
- dass das erste Elektrogerät (2, 4) dem zweiten Elektrogerät (2, 4) zugeordnet ist, wenn gemäß der Zuordnung ein erster individueller Geräteidentifikator des ersten Elektrogeräts (2, 4) einem zweiten individuellen Geräteidentifikator des zweiten Elektrogeräts (2, 4) zugeordnet ist; oder
- dass das erste Akkupack (3, 5) dem zweiten Akkupack (3, 5) zugeordnet ist, wenn gemäß der Zuordnung ein erster individueller Akkuidentifikator des ersten Akkupacks (3, 5) einem zweiten individuellen Akkuidentifikator des zweiten Akkupacks (3, 5) zugeordnet ist.

5. Verfahren nach einem der Ansprüche 1 bis 3, wobei als Ergebnis der Überprüfung festgestellt wird,
- dass das erste Akkupack (3, 5) dem zweiten Elektrogerät (2, 4) zugeordnet ist, wenn gemäß der Zuordnung ein erster individueller Akkuidentifikator des ersten Akkupacks (3, 5) einem zweiten individuellen Geräteidentifikator des zweiten Elektrogeräts (2, 4) zugeordnet ist; und/oder
- dass das erste Elektrogerät (2, 4) dem zweiten Akkupack (3, 5) zugeordnet ist, wenn gemäß der Zuordnung ein erster individueller Geräteidentifikator des ersten Elektrogeräts (2, 4) einem zweiten individuellen Akkuidentifikator des zweiten Akkupacks (3, 5) zugeordnet ist.

6. Verfahren nach einem der Ansprüche 1 oder 2, wobei als Ergebnis der Überprüfung festgestellt wird,
- dass das erste Akkupack (3, 5) dem zweiten Elektrogerät (2, 4) zugeordnet ist, wenn gemäß der Zuordnung ein erster individueller Akkuidentifikator des ersten Akkupacks (3, 5) einem zweiten Gerätetyp des zweiten Elektrogeräts (2, 4) zugeordnet ist; und/oder
- dass das erste Elektrogerät (2, 4) dem zweiten Akkupack (3, 5) zugeordnet ist, wenn gemäß der Zuordnung ein erster Gerätetyp des ersten Elektrogeräts (2, 4) einem zweiten individuellen Akkuidentifikator des zweiten Akkupacks (3, 5) zugeordnet ist.

7. Verfahren nach einem der vorhergehenden Ansprüche, wobei das zweite Akkupack (3, 5) oder das zweite Elektrogerät (2, 4) die Steuereinheit (6, 7, 10) beinhaltet und wobei
- die Aktivierungsinformation über eine direkte drahtlose Kommunikationsverbindung zwischen einer ersten Kommunikationsschnittstelle (8, 11) des ersten Akkupacks (3, 5) oder des ersten Elektrogeräts (2, 4) und einer zweiten Kommunikationsschnittstelle (8, 11) der Steuereinheit (6, 7, 10) übermittelt wird; oder
- die Aktivierungsinformation über eine indirekte Kommunikationsverbindung zwischen der ersten Kommunikationsschnittstelle (8, 11) und der zweiten Kommunikationsschnittstelle (8, 11) übermittelt wird, wobei die indirekte Kommunikationsverbindung über eine externe Servercomputereinheit hergestellt wird.

8. Verfahren nach Anspruch 7, wobei
- das zweite Akkupack (3, 5) oder das zweite Elektrogerät (2, 4) die Zuordnungsvorschrift speichert; oder
- das erste Akkupack (3, 5) oder das erste Elektrogerät (2, 4) die Zuordnungsvorschrift speichert und die Zuordnungsvorschrift von dem ersten Akkupack (3, 5) oder dem ersten Elektrogerät (2, 4) zusammen mit der Aktivierungsinformation oder wenn die Aktivierungsinformation übermittelt wurde an das zweite Akkupack (3, 5) oder das zweite Elektrogerät (2, 4) übermittelt wird; oder
- die Servercomputereinheit die Zuordnungsvorschrift speichert und die Zuordnungsvorschrift von der Servercomputereinheit an das zweite Akkupack (3, 5) oder das zweite Elektrogerät (2, 4) übermittelt wird, wenn die Aktivierungsinformation übermittelt wurde.

9. Verfahren nach einem der Ansprüche 1 bis 6, wobei eine externe Servercomputereinheit die Steuereinheit (6, 7, 10) beinhaltet.

10. Verfahren nach Anspruch 9, wobei
- die Servercomputereinheit die Zuordnungsvorschrift speichert; oder
- das erste Akkupack (3, 5) oder das erste Elektrogerät (2, 4) die Zuordnungsvorschrift speichert und die Zuordnungsvorschrift von dem ersten Akkupack (3, 5) oder dem ersten Elektrogerät (2, 4) an die Servercomputereinheit übermittelt wird, wenn die Aktivierungsinformation übermittelt wurde; oder
- das zweite Akkupack (3, 5) oder das zweite Elektrogerät (2, 4) die Zuordnungsvorschrift speichert und die Zuordnungsvorschrift von dem zweiten Akkupack (3, 5) oder dem zweiten Elektrogerät (2, 4) an die Servercomputereinheit übermittelt wird, wenn die Aktivierungsinformation übermittelt wurde.

11. Verfahren nach einem der vorhergehenden Ansprüche, wobei
- mittels des ersten Akkupacks (3, 5) oder des ersten Elektrogeräts (2, 4) oder des zweiten Akkupacks (3, 5) oder des zweiten Elektrogeräts (2, 4) eine Benutzereingabe erfasst wird; und
- die Aktivierungsinformation in Reaktion auf die erfasste Benutzereingabe übermittelt wird oder der aktive Betriebsmodus nur dann aktiviert oder verändert wird, wenn die Benutzereingabe erfasst wurde.

12. Kommunikationssystem (1) zum gekoppelten Betrieb eines ersten Elektrogeräts (2, 4), das mittels eines ersten Akkupacks (3, 5) betreibbar ist, und eines zweiten Elektrogeräts (2, 4), das mittels eines zweiten Akkupacks (3, 5) betreibbar ist, das Kommunikationssystem (1) aufweisend
- einen Sensorschaltkreis, der dazu eingerichtet ist, eine Aktivierung des ersten Elektrogeräts (2, 4) automatisch zu detektieren;
- eine erste Kommunikationsschnittstelle (8, 11) für das erste Akkupack (3, 5) oder das erste Elektrogerät (2, 4), das mit dem Sensorschaltkreis gekoppelt ist und dazu eingerichtet ist, abhängig von der Detektion der Aktivierung eine Aktivierungsinformation zu senden;
- eine externe Steuereinheit (6, 7, 10) mit einer zweiten Kommunikationsschnittstelle (8, 11), die dazu eingerichtet ist, die Aktivierungsinformation zu erhalten, wobei die Steuereinheit (6, 7, 10) dazu eingerichtet ist, wenn die Aktivierungsinformation erhalten wurde, zu überprüfen wird, ob das erste Akkupack (3, 5) und/oder das erste Elektrogerät (2, 4) dem zweiten Akkupack (3, 5) und/oder dem zweiten Elektrogerät (2, 4) gemäß einer vorgegebenen Zuordnungsvorschrift zugeordnet ist, wobei eine gültige Zuordnung nur gegeben ist, wenn sich das erste Elektrogerät (2, 4) und das weite Elektrogerät (2, 4) innerhalb einer Maximaldistanz voneinander befinden oder wenn sich das erste Akkupack (3, 5) und das zweite Akkupack (3, 5) innerhalb einer Maximaldistanz voneinander befinden; und
- einen Steuerschaltkreis (7, 10) für das zweite Akkupack (3, 5) oder das zweite Elektrogerät (2, 4), der dazu eingerichtet ist, abhängig von einem Ergebnis der Überprüfung automatisch einen aktiven Betriebsmodus des zweiten Elektrogeräts (2, 4) zu aktivieren oder zu verändern.

13. Kommunikationssystem (1) nach Anspruch 12, aufweisend eine externe Servercomputereinheit, welche die Steuereinheit (6, 7, 10) beinhaltet.

14. Kommunikationssystem (1) nach Anspruch 13, wobei die Servercomputereinheit eine Speichereinheit enthält, welche die Zuordnungsvorschrift speichert.

15. Kommunikationssystem (1) nach Anspruch 12, aufweisend eine Speichereinheit für das erste Akkupack (3, 5) oder für das das erste Elektrogerät (2, 4) oder für das zweite Akkupack (3, 5) oder für das das zweite Elektrogerät (2, 4), wobei die Speichereinheit die Zuordnungsvorschrift speichert.

## Claims

1. A method for the coupled operation of a first electrical device (2, 4), which is operable by means of a first battery pack (3, 5), and a second electrical device (2, 4), which is operable by means of a second battery pack (3, 5), wherein
- an activation of the first electrical device (2, 4) is automatically detected,
- depending on the detection of the activation, activation information is transferred from the first battery pack (3, 5) or the first electrical device (2, 4) to an external control unit (6, 7, 10);
- when the activation information has been transferred, it is examined by means of the control unit (6, 7, 10) if the first battery pack (3, 5) and/or the first electrical device (2, 4) are associated with the second battery pack (3, 5) and/or the second electrical device (2, 4) according to a preset association rule, wherein a valid association is only given if the first electrical device (2, 4) and the second electrical device (2, 4) are within a maximum distance from each other or if the first battery pack (3, 5) and the second battery pack (3, 5) are within a maximum distance from each other; and
- depending on a result of the examination, an active operating mode of the second electrical device (2, 4) is automatically activated or changed.

2. The method according to claim 1, wherein the active operating mode is activated or changed only if it is determined as a result of the examination that
- the first battery pack (3, 5) is associated with the second battery pack (3, 5) and/or the second electrical device (2, 4); or
- the first electrical device (2, 4) is associated with the second battery pack (3, 5) and/or the second electrical device (2, 4).

3. The method according to any one of the preceding claims, wherein it is determined as a result of the examination that the first electrical device (2, 4) is associated with the second electrical device (2, 4) if a first device type of the first electrical device (2, 4) is associated with a second device type of the second electrical device (2, 4) according to the association.

4. The method according to any one of claims 1 or 2, wherein it is determined as a result of the examination
- that the first electrical device (2, 4) is associated with the second electrical device (2, 4) if a first individual device identifier of the first electrical device (2, 4) is associated with a second individual device identifier of the second electrical device (2, 4) according to the association; or
- that the first battery pack (3, 5) is associated with the second battery pack (3, 5) if a first individual battery identifier of the first battery pack (3, 5) is associated with a second individual battery identifier of the second battery pack (3, 5) according to the association.

5. The method according to any one of claims 1 to 3, wherein it is determined as a result of the examination
- that the first battery pack (3, 5) is associated with the second electrical device (2, 4) if a first individual battery identifier of the first battery pack (3, 5) is associated with a second individual device identifier of the second electrical device (2, 4) according to the association; and/or
- that the first electrical device (2, 4) is associated with the second battery pack (3, 5) if a first individual device identifier of the first electrical device (2, 4) is associated with a second individual battery identifier of the second battery pack (3, 5) according to the association.

6. The method according to any one of claims 1 or 2, wherein it is determined as a result of the examination
- that the first battery pack (3, 5) is associated with the second electrical device (2, 4) if a first individual battery identifier of the first battery pack (3, 5) is associated with a second device type of the second electrical device (2, 4) according to the association; and/or
- that the first electrical device (2, 4) is associated with the second battery pack (3, 5) if a first device type of the first electrical device (2, 4) is associated with a second individual battery identifier of the second battery pack (3, 5) according to the association.

7. The method according to any one of the preceding claims, wherein the second battery pack (3, 5) or the second electrical device (2, 4) includes the control unit (6, 7, 10), and wherein
- the activation information is transferred via a direct wireless communication connection between a first communication interface (8, 11) of the first battery pack (3, 5) or the first electrical device (2, 4) and a second communication interface (8, 11) of the control unit (6, 7, 10); or
- the activation information is transferred via an indirect communication connection between the first communication interface (8, 11) and the second communication interface (8, 11), wherein the indirect communication connection is established via an external server computer unit.

8. The method according to claim 7, wherein
- the second battery pack (3, 5) or the second electrical device (2, 4) stores the association rule; or
- the first battery pack (3, 5) or the first electrical device (2, 4) stores the association rule and transfers the association rule from the first battery pack (3, 5) or the first electrical device (2, 4), together with the activation information or when the activation information has been transferred, to the second battery pack (3, 5) or the second electrical device (2, 4); or
- the server computer unit stores the association rule and the association rule is transferred from the server computer unit to the second battery pack (3, 5) or the second electrical device (2, 4) when the activation information has been transferred.

9. The method according to any one of claims 1 to 6, wherein an external server computer unit includes the control unit (6, 7, 10).

10. The method according to claim 9, wherein
- the server computer unit stores the association rule; or
- the first battery pack (3, 5) or the first electrical device (2, 4) stores the association rule and the association rule is transferred from the first battery pack (3, 5) or the first electrical device (2, 4) to the server computer unit when the activation information has been transferred; or
- the second battery pack (3, 5) or the second electrical device (2, 4) stores the association rule and the association rule is transferred from the second battery pack (3, 5) or the second electrical device (2, 4) to the server computer unit when the activation information has been transferred.

11. The method according to any one of the preceding claims, wherein
- a user input is captured by means of the first battery pack (3, 5) or the first electrical device (2, 4) or the second battery pack (3, 5) or the second electrical device (2, 4); and
- the activation information is transferred in response to the captured user input or the active operating mode is activated or changed only if the user input has been captured.

12. A communication system (1) for the coupled operation of a first electrical device (2, 4), which is operable by means of a first battery pack (3, 5), and a second electrical device (2, 4), which is operable by means of a second battery pack (3, 5), the communication system (1) comprising
- a sensor circuit, which is configured to automatically detect an activation of the first electrical device (2, 4);
- a first communication interface (8, 11) for the first battery pack (3, 5) or the first electrical device (2, 4), which is coupled to the sensor circuit and configured to send activation information depending on the detection of the activation;
- an external control unit (6, 7, 10) with a second communication interface (8, 11), which is configured to obtain the activation information, wherein the control unit (6, 7, 10) is configured, when the activation information has been obtained, to examine if the first battery pack (3, 5) and/or the first electrical device (2, 4) are associated with the second battery pack (3, 5) and/or the second electrical device (2, 4) according to a preset association rule, wherein a valid association is only given if the first electrical device (2, 4) and the second electrical device (2, 4) are within a maximum distance from each other or if the first battery pack (3, 5) and the second battery pack (3, 5) are within a maximum distance from each other; and
- a control circuit (7, 10) for the second battery pack (3, 5) or the second electrical device (2, 4), which is configured to automatically activate or change an active operating mode of the second electrical device (2, 4) depending on a result of the examination.

13. The communication system (1) according to claim 12, comprising an external server computer unit, which includes the control unit (6, 7, 10).

14. The communication system (1) according to claim 13, wherein the server computer unit includes a storage unit, which stores the association rule.

15. The communication system (1) according to claim 12, comprising a storage unit for the first battery pack (3, 5) or for the first electrical device (2, 4) or for the second battery pack (3, 5) or for the second electrical device (2, 4), wherein the storage unit stores the association rule.

## Revendications

1. Procédé pour le fonctionnement couplé d'un premier appareil électrique (2, 4) pouvant être mis en fonctionnement au moyen d'un premier bloc-batterie (3, 5), et d'un deuxième appareil électrique (2, 4) pouvant être mis en fonctionnement au moyen d'un deuxième bloc-batterie (3, 5), dans lequel
- une activation du premier appareil électrique (2, 4) est détectée automatiquement ;
- en fonction de la détection de l'activation, une information d'activation est transmise du premier bloc-batterie (3, 5) ou du premier appareil électrique (2, 4) à une unité de commande externe (6, 7, 10) ;
- lorsque l'information d'activation a été transmise, il est vérifié au moyen de l'unité de commande (6, 7, 10) si le premier bloc-batterie (3, 5) et/ou le premier appareil électrique (2, 4) est associé au deuxième bloc-batterie (3, 5) et/ou au deuxième appareil électrique (2, 4) selon une règle d'association prédéfinie, une association valable n'étant indiquée que si le premier appareil électrique (2, 4) et le deuxième appareil électrique (2, 4) se trouvent en deçà d'une distance maximale l'un de l'autre ou si le premier bloc-batterie (3, 5) et le deuxième bloc-batterie (3, 5) se trouvent en deçà d'une distance maximale l'un de l'autre ; et
- en fonction d'un résultat de la vérification, un mode de fonctionnement actif du deuxième appareil électrique (2, 4) est automatiquement activé ou modifié.

2. Procédé selon la revendication 1, dans lequel le mode de fonctionnement actif n'est activé ou modifié que s'il est établi, comme résultat de la vérification, que
- le premier bloc-batterie (3, 5) est associé au deuxième bloc-batterie (3, 5) et/ou au deuxième appareil électrique (2, 4) ; ou
- le premier appareil électrique (2, 4) est associé au deuxième bloc-batterie (3, 5) et/ou au deuxième appareil électrique (2, 4).

3. Procédé selon l'une quelconque des revendications précédentes, dans lequel il est établi, comme résultat de la vérification, que le premier appareil électrique (2, 4) est associé au deuxième appareil électrique (2, 4) lorsque, selon l'association, un premier type d'appareil du premier appareil électrique (2, 4) est associé à un deuxième type d'appareil du deuxième appareil électrique (2, 4).

4. Procédé selon l'une quelconque des revendications 1 ou 2, dans lequel il est établi, comme résultat de la vérification,
- que le premier appareil électrique (2, 4) est associé au deuxième appareil électrique (2, 4) lorsque, selon l'association, un premier identificateur d'appareil individuel du premier appareil électrique (2, 4) est associé à un deuxième identificateur d'appareil individuel du deuxième appareil électrique (2, 4) ; ou
- que le premier bloc-batterie (3, 5) est associé au deuxième bloc-batterie (3, 5) lorsque, selon l'association, un premier identificateur de batterie individuel du premier bloc-batterie (3, 5) est associé à un deuxième identificateur de batterie individuel du deuxième bloc-batterie (3, 5).

5. Procédé selon l'une quelconque des revendications 1 à 3, dans lequel il est établi, comme résultat de la vérification
- que le premier bloc-batterie (3, 5) est associé au deuxième appareil électrique (2, 4) lorsque, selon l'association, un premier identificateur de batterie individuel du premier bloc-batterie (3, 5) est associé à un deuxième identificateur d'appareil individuel du deuxième appareil électrique (2, 4) ; et/ou
- que le premier appareil électrique (2, 4) est associé au deuxième bloc-batterie (3, 5) lorsque, selon l'association, un premier identificateur d'appareil individuel du premier appareil électrique (2, 4) est associé à un deuxième identificateur de batterie individuel du deuxième bloc-batterie (3, 5).

6. Procédé selon l'une quelconque des revendications 1 ou 2, dans lequel il est établi, comme résultat de la vérification,
- que le premier bloc-batterie (3, 5) est associé au deuxième appareil électrique (2, 4) lorsque, selon l'association, un premier identificateur de batterie individuel du premier bloc-batterie (3, 5) est associé à un deuxième type d'appareil du deuxième appareil électrique (2, 4) ; et/ou
- que le premier appareil électrique (2, 4) est associé au deuxième bloc-batterie (3, 5) lorsque, selon l'association, un premier type d'appareil du premier appareil électrique (2, 4) est associé à un deuxième identificateur de batterie individuel du deuxième bloc-batterie (3, 5) .

7. Procédé selon l'une quelconque des revendications précédentes, dans lequel le deuxième bloc-batterie (3, 5) ou le deuxième appareil électrique (2, 4) comprend l'unité de commande (6, 7, 10) et dans lequel
- l'information d'activation est transmise par l'intermédiaire d'une liaison de communication sans fil directe entre une première interface de communication (8, 11) du premier bloc-batterie (3, 5) ou du premier appareil électrique (2, 4) et une deuxième interface de communication (8, 11) de l'unité de commande (6, 7, 10) ; ou
- l'information d'activation est transmise par l'intermédiaire d'une liaison de communication indirecte entre la première interface de communication (8, 11) et la deuxième interface de communication (8, 11), la liaison de communication indirecte étant établie par l'intermédiaire d'une unité informatique serveur externe.

8. Procédé selon la revendication 7, dans lequel
- le deuxième bloc-batterie (3, 5) ou le deuxième appareil électrique (2, 4) mémorise la règle d'association ; ou
- le premier bloc-batterie (3, 5) ou le premier appareil électrique (2, 4) mémorise la règle d'association, et la règle d'association est transmise du premier bloc-batterie (3, 5) ou du premier appareil électrique (2, 4) au deuxième bloc-batterie (3, 5) ou au deuxième appareil électrique (2, 4) avec l'information d'activation ou lorsque l'information d'activation a été transmise ; ou
- l'unité informatique serveur mémorise la règle d'association, et la règle d'association est transmise de l'unité informatique serveur au deuxième bloc-batterie (3, 5) ou au deuxième appareil électrique (2, 4) lorsque l'information d'activation a été transmise.

9. Procédé selon l'une quelconque des revendications 1 à 6, dans lequel une unité informatique serveur externe comprend l'unité de commande (6, 7, 10).

10. Procédé selon la revendication 9, dans lequel
- l'unité informatique serveur mémorise la règle d'association ; ou
- le premier bloc-batterie (3, 5) ou le premier appareil électrique (2, 4) mémorise la règle d'association, et la règle d'association est transmise du premier bloc-batterie (3, 5) ou du premier appareil électrique (2, 4) à l'unité informatique serveur lorsque l'information d'activation a été transmise ; ou
- le deuxième bloc-batterie (3, 5) ou le deuxième appareil électrique (2, 4) mémorise la règle d'association, et la règle d'association est transmise du deuxième bloc-batterie (3, 5) ou du deuxième appareil électrique (2, 4) à l'unité informatique serveur lorsque l'information d'activation a été transmise.

11. Procédé selon l'une quelconque des revendications précédentes, dans lequel
- une entrée utilisateur est détectée au moyen du premier bloc-batterie (3, 5) ou du premier appareil électrique (2, 4) ou du deuxième bloc-batterie (3, 5) ou du deuxième appareil électrique (2, 4) ; et
- l'information d'activation est transmise en réponse à l'entrée utilisateur détectée, ou le mode de fonctionnement actif n'est activé ou modifié que si l'entrée utilisateur a été détectée.

12. Système de communication (1) pour le fonctionnement couplé d'un premier appareil électrique (2, 4) pouvant être mis en fonctionnement au moyen d'un premier bloc-batterie (3, 5), et d'un deuxième appareil électrique (2, 4) pouvant être mis en fonctionnement au moyen d'un deuxième bloc-batterie (3, 5), le système de communication (1) comportant
- un circuit de détection qui est conçu pour détecter automatiquement une activation du premier appareil électrique (2, 4) ;
- une première interface de communication (8, 11) pour le premier bloc-batterie (3, 5) ou le premier appareil électrique (2, 4), qui est couplée au circuit de détection et est configurée pour envoyer une information d'activation en fonction de la détection de l'activation ;
- une unité de commande externe (6, 7, 10) dotée d'une deuxième interface de communication (8, 11), qui est conçue pour obtenir l'information d'activation, l'unité de commande (6, 7, 10) étant conçue pour vérifier, lorsque l'information d'activation a été obtenue, si le premier bloc-batterie (3, 5) et/ou le premier appareil électrique (2, 4) est associé au deuxième bloc-batterie (3, 5) et/ou au deuxième appareil électrique (2, 4) selon une règle d'association prédéfinie, une association valable n'étant indiquée que si le premier appareil électrique (2, 4) et le deuxième appareil électrique (2, 4) se trouvent en deçà d'une distance maximale l'un de l'autre ou si le premier bloc-batterie (3, 5) et le deuxième bloc-batterie (3, 5) se trouvent en deçà d'une distance maximale l'un de l'autre ; et
- un circuit de commande (7, 10) pour le deuxième bloc-batterie (3, 5) ou le deuxième appareil électrique (2, 4), qui est conçu pour activer ou modifier automatiquement un mode de fonctionnement actif du deuxième appareil électrique (2, 4) en fonction du résultat de la vérification.

13. Système de communication (1) selon la revendication 12, comportant une unité informatique serveur externe qui comprend l'unité de commande (6, 7, 10).

14. Système de communication (1) selon la revendication 13, dans lequel l'unité informatique serveur comporte une unité de mémoire qui mémorise la règle d'association.

15. Système de communication (1) selon la revendication 12, comportant une unité de mémoire pour le premier bloc-batterie (3, 5) ou pour le premier appareil électrique (2, 4) ou pour le deuxième bloc-batterie (3, 5) ou pour le deuxième appareil électrique (2, 4), l'unité de mémoire mémorisant la règle d'association.
